# EUROPÄISCHE PATENTSCHRIFT

(11) **EP 3 751 072 B1**
(45) Veröffentlichungstag und Bekanntmachung des Hinweises auf die Patenterteilung: **31.07.2024**
(21) Anmeldenummer: 20170988.8
(22) Anmeldetag: 23.04.2020
(51) Int. Cl.: B32B 5/02, B32B 27/12, B32B 5/26, B32B 7/02, E04D 5/10

(54) **FLACHMATERIAL EINER DACHKONSTRUKTION**
FLAT MATERIAL OF A ROOF CONSTRUCTION
MATÉRIAU PLAN D'UNE CONSTRUCTION DE TOIT

(30) Priorität: 13.06.2019 DE 102019004121
(43) Veröffentlichungstag der Anmeldung: 16.12.2020
(73) Patentinhaber: K.L. Kaschier- und Laminier GmbH, 48455 Bad Bentheim-Gildehaus (DE)
(72) Erfinder: Schulze Wehninck, Rembert, 82327 Tutzing (DE); Ostermann, Monika, 40124 Georgsmarienhütte Nordrhein Westfalen (DE)
(74) Vertreter: Cohausz Hannig Borkowski Wißgott

(56) Entgegenhaltungen:
- EP-A1- 2 826 620
- EP-A1- 3 266 845
- DE-A1- 102016 107 418
- US-A1- 2009 100 775

## Beschreibung

Die Erfindung betrifft ein wasserabhaltendes Flachmaterial für Dachkonstruktionen mit mindestens einer wasserundurchlässigen Schicht als wasserundurchlässige Dachmembran, wobei unterhalb der wasserundurchlässigen Schicht mindestens eine wasseraufnehmende Schicht als Notfallabdichtung angeordnet ist, die einen wasseraufsaugenden Kunststoff aufweist, und wobei der wasseraufsaugende Kunststoff ein Superabsorber ist, der durch das Wasser zu einem Hydrogel wird.

Zum Abdichten von Dächern mit geringer Neigung oder von Flachdächern werden häufig Bitumenbahnen verwendet. Ferner ist es bekannt, mehrschichtige Dichtungsbahnen aus Kunststoff zu verwenden. Hierbei ist die oberste Bahn oder Membran hohen mechanischen Belastungen ausgesetzt, die zu Rissen führen können, so dass Wasser in die Dichtungsbahn eindringen kann, das spätestens durch Frost die Undichtigkeit vergrößert und zu Dachschäden führt.

Aus der US 2009/100775 A1 ist ein wasserabhaltendes Flachmaterial für eine Dachkonstruktion mit mindestens einer wasserundurchlässigen Schicht einer Dachmembran, wobei unterhalb der wasserundurchlässigen Schicht mindestens eine wasseraufnehmende Schicht als Notfallabdichtung angeordnet ist, die einen wasseraufsaugenden Kunststoff aufweist, wobei der wasseraufsaugende Kunststoff ein Superabsorber ist, der durch das Wasser zu einem Hydrogel wird.

Aufgabe der Erfindung ist, für Dachabdichtungen ein Flachmaterial zu schaffen, das eine ausreichende Dichtheit besitzt, wenn die oberste wasserundurchlässige Schicht durch Risse, Durchbrüche oder Perforierungen wasserdurchlässig geworden ist und geringe Mengen eines wasseraufnehmenden Kunststoffs benötigt.

Diese Aufgabe wird erfindungsgemäß dadurch gelöst, dass der wasseraufnehmende Kunststoff als Superabsorber in der wasseraufnehmenden Schicht ungleichmäßig punktförmig verteilt angeordnet ist.

Eine wasseraufnehmende Schicht unterhalb der obersten wasserundurchlässigen Schicht führt zu einer erheblich höheren Dichtsicherheit, da durch die wasseraufnehmende Schicht nicht nur bestimmte Wassermengen festgehalten werden und damit daran gehindert werden, weiter nach unten zu dringen, sondern die wasseraufnehmende Schicht vergrößert auch durch die Wasseraufnahme ihr Volumen und erzeugt damit eine weitere Abdichtung. Hierbei wird durch die ungleichmäßige punktförmige Verteilung eine verhältnismäßig geringe Menge an wasseraufsaugendem Kunststoff benötigt.

Eine Verbesserung der Stabilität der wasseraufnehmenden Schicht wird erreicht, wenn die wasseraufnehmende Schicht eine nicht gewebte Textilfaserplatte ist. Vorzugsweise wird vorgeschlagen, dass die wasserundurchlässige Schicht und die wasseraufsaugende Schicht miteinander verbunden sind und ein zwei- oder mehrschichtiges flächiges Produkt bilden.

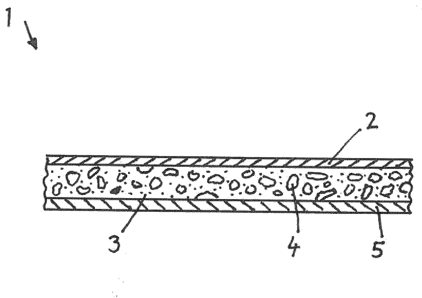

Auch ist von Vorteil, wenn unterhalb der wasseraufnehmenden Schicht eine stabilisierende Rückenmaterialschicht befestigt ist. Hierbei wird vorgeschlagen, dass die Rückenmaterialschicht einen Risse überbrückenden Vliesstoff aufweist. Ein Ausführungsbeispiel der Erfindung ist in der Zeichnung in einem senkrechten Schnitt schematisch dargestellt und wird im Folgenden näher beschrieben.

Das Flachmaterial 1 zur wasserabhaltenden Abdichtung einer Dachkonstruktion insbesondere für ein Dach geringer Neigung oder für ein Flachdach weist zuoberst eine wasserundurchlässige Schicht 2 in Form einer wasserdichten Kunststoffmembran oder Kunststofffolie auf, die genügend stabil ist, um trittfest zu sein.

Unterhalb der wasserundurchlässigen Schicht 2 ist eine wasseraufnehmende Schicht 3 angeordnet bzw. befestigt, die einen wasseraufsaugenden Kunststoff 4 aufweist. Sobald die Schicht 2 wasserdurchlässig geworden ist aufgrund eines Durchbruchs, eines Risses oder einer Perforation wird das durchgetretene Wasser von dem wasseraufsaugenden Kunststoff 4 aufgenommen. Vorzugsweise ist die wasseraufnehmende Schicht 3 eine nicht gewebte Textilfaserplatte.

Als wasseraufsaugender Kunststoff 4 wird ein Superabsorber (Superabsorbent Polymers, SAP) verwendet. Dies ist ein Kunststoff, der in der Lage ist, ein Vielfaches des Eigengewichts an Wasser aufzusaugen. Bei der Aufnahme des Wassers quillt der Superabsorber auf und bildet ein Hydrogel, das abdichtend wirkt.

In der zeichnerisch dargestellten Ausführung ist der Superabsorber in einer Kunststoffschicht als einzelne Kleinmengen ungleichmäßig punktförmig verteilt eingebettet wobei die Kunststoffschicht ein Granulat sein kann.

Unterhalb der wasseraufnehmenden Schicht ist eine stabilisierende Rückenmaterialschicht 5 als Tragschicht angeordnet insbesondere befestigt, die vorzugsweise einen Risse überbrückenden Vliesstoff aufweist. Damit weist das Flachmaterial 1 mindestens drei Schichten auf.

## Patentansprüche

1. Wasserabhaltendes Flachmaterial (1) für Dachkonstruktionen mit mindestens einer wasserundurchlässigen Schicht (2) als wasserundurchlässige Dachmembran, wobei unterhalb der wasserundurchlässigen Schicht (2) mindestens eine wasseraufnehmende Schicht (3) als Notfallabdichtung angeordnet ist, die einen wasseraufsaugenden Kunststoff (4) aufweist, und wobei der wasseraufsaugende Kunststoff (4) ein Superabsorber ist, der durch das Wasser zu einem Hydrogel wird, **dadurch gekennzeichnet, dass** der wasseraufnehmende Kunststoff (4) als Superabsorber in der wasseraufnehmenden Schicht (3) ungleichmäßig punktförmig verteilt angeordnet ist.

2. Flachmaterial nach Anspruch 1, **dadurch gekennzeichnet, dass** die wasseraufnehmende Schicht (3) eine nicht gewebte Textilfaserplatte ist.

3. Flachmaterial nach Anspruch 1 oder 2, **dadurch gekennzeichnet, dass** die wasserundurchlässige Schicht (2) und die wasseraufsaugende Schicht (3) miteinander verbunden sind und ein zwei- oder mehrschichtiges flächiges Produkt bilden.

4. Flachmaterial nach einem der vorherigen Ansprüche, **dadurch gekennzeichnet, dass** unterhalb der wasseraufnehmenden Schicht (3) eine stabilisierende Rückenmaterialschicht (5) befestigt ist.

5. Flachmaterial nach Anspruch 4, **dadurch gekennzeichnet, dass** die Rückenmaterialschicht (5) einen Risse überbrückenden Vliesstoff aufweist.

## Claims

1. Water-repellent flat material (1) for roof constructions with at least one water-impermeable layer (2) as a water-impermeable roof membrane, wherein at least one water-catching layer (3) is arranged underneath the water-impermeable layer (2) as an emergency seal, which has a water-absorbing plastic (4), and wherein the water-absorbing plastic (4) is a superabsorber which is turned into a hydrogel by the water, **characterised in that** the water-absorbing plastic (4) is arranged as the superabsorber in the water-catching layer (3) in a non-uniform point distribution.

2. Flat material according to claim 1, **characterised in that** the water-catching layer (3) is a non-woven textile fibre sheet.

3. Flat material according to claim 1 or 2, **characterised in that** the water-impermeable layer (2) and the water-absorbent layer (3) are bonded together and form a two- or multi-layer flat product.

4. Flat material according to one of the preceding claims, **characterised in that** a stabilising back material layer (5) is attached beneath the water-catching layer (3).

5. Flat material according to claim 4, **characterised in that** the back material layer (5) comprises a crack-bridging non-woven fabric.

## Revendications

1. Matériau plat hydrofuge (1) pour les constructions de toit avec au moins une couche imperméable à l'eau (2) comme membrane de toit imperméable à l'eau, dans lequel au moins une couche de capture d'eau (3) est disposée sous la couche imperméable à l'eau (2) comme joint d'urgence, qui a une matière plastique absorbant l'eau (4), et dans laquelle la matière plastique absorbant l'eau (4) est un superabsorbant transformé en hydrogel par l'eau, **caractérisée par le fait que** la matière plastique absorbant l'eau (4) est disposée en tant que superabsorbant dans la couche absorbant l'eau (3) selon une distribution ponctuelle non uniforme.

2. Matériau plat selon la revendication 1, **caractérisé par le fait que** la couche d'absorption d'eau (3) est une feuille de fibres textiles non tissées.

3. Matériau plat selon la revendication 1 ou 2, **caractérisé par le fait que** la couche imperméable à l'eau (2) et la couche absorbante d'eau (3) sont collées ensemble et forment un produit plat à deux ou plusieurs couches.

4. Matériau plat selon l'une des revendications précédentes, **caractérisé par le fait qu'une** couche de matériau dorsal stabilisant (5) est fixée sous la couche d'absorption d'eau (3).

5. Matériau plat selon la revendication 4, **caractérisé par le fait que** la couche de matériau arrière (5) comprend un tissu non tissé qui comble les fissures.
